Europäisches Patentamt

European Patent Office

Office européen des brevets

(19)

(11) Veröffentlichungsnummer: **0 541 604 B1**

## (12) EUROPÄISCHE PATENTSCHRIFT

(45) Veröffentlichungstag der Patentschrift: **07.12.94**

(21) Anmeldenummer: **91913342.1**

(22) Anmeldetag: **24.07.91**

(86) Internationale Anmeldenummer:
**PCT/EP91/01379**

(87) Internationale Veröffentlichungsnummer:
**WO 92/02590 (20.02.92 92/05)**

(51) Int. Cl.5: **C09D 133/08**, C09D 167/02,
C09D 175/06

Die Akte enthält technische Angaben, die nach dem Eingang der Anmeldung eingereicht wurden und die nicht in dieser Patentschrift enthalten sind.

(54) ÜBERZUGSMITTEL AUF DER BASIS HYDROXYLGRUPPEN ENTHALTENDER POLYKONDENSATIONS- UND POLYADDITIONSPRODUKTE SOWIE DEREN VERWENDUNG.

(30) Priorität: **31.07.90 DE 4024204**

(43) Veröffentlichungstag der Anmeldung:
**19.05.93 Patentblatt 93/20**

(45) Bekanntmachung des Hinweises auf die
Patenterteilung:
**07.12.94 Patentblatt 94/49**

(84) Benannte Vertragsstaaten:
**AT BE CH DE DK ES FR GB IT LI NL SE**

(56) Entgegenhaltungen:
EP-A- 0 036 975      EP-A- 0 123 253
DE-A- 2 231 475      DE-A- 3 213 160
DE-A- 3 322 830      DE-B- 2 249 431

(73) Patentinhaber: **BASF Lacke + Farben AG**
**Glasuritstrasse 1**
**D-48165 Münster-Hiltrup (DE)**

(72) Erfinder: **HOFFMANN, Peter, Dr.**
**Erlengrund 215**
**D-4403 Senden (DE)**
Erfinder: **JUNG, Werner Alfons, Dr.**
**Uhrwerkerstrasse 82**
**D-4715 Ascheberg (DE)**
Erfinder: **BRÜNNEMANN, Michael**
**Eichendorffstrasse 41**
**D-4400 Münster (DE)**

(74) Vertreter: **Münch, Volker, Dr.**
**BASF Lacke + Farben AG**
**Patente/Lizenzen/Dokumentation**
**Postfach 61 23**
**D-48136 Münster (DE)**

**Beschreibung**

Die vorliegende Erfindung betrifft Überzugsmittel auf der Basis Hydroxylgruppen enthaltendener Polykondensations- und Polyadditionsprodukte, enthaltend

A) eine hydroxylgruppenhaltige Komponente (A) als Bindemittel,
B) mindestens ein Polyisocyanat als Vernetzer,
C) ein oder mehrere organische Lösungsmittel,
D) ggf. übliche Hilfs- und Zusatzstoffe,

bei dem die Komponenten (A) und (B) in solchen Mengen enthalten sind, daß das Verhältnis der Anzahl der freien OH-Gruppen der Komponente (A) zur Anzahl der Isocyanatgruppen der Komponente (B) im Bereich von 1 : 3 bis 3 : 1 liegt.

Die Erfindung betrifft außerdem Verfahren zur Herstellung dieser Überzugsmittel sowie die Verwendung der Überzugsmittel in der Autoreparaturlackierung, insbesondere als Klarlack.

Überzugsmittel auf der Basis einer Kombination aus einem Polykondensationsharz und einem Polyadditionsharz sind bekannt.

So werden in der DE-PS 2806497 Klarlacke für Mehrschichtlackierungen beschrieben, die als Bindemittel eine Mischung aus einem hydroxylgruppenhaltigen Polyester und einem hydroxylgruppenhaltigen Acrylatharz enthalten. Als Vernetzer enthalten die Klarlacke ein Aminoplastharz. Durch die Verwendung von aliphatischen und/oder cycloaliphatischen Polycarbonsäuren und aliphatischen und/oder cycloaliphatischen Polyolen bei der Herstellung der Polyester werden Klarlacke erhalten, die im Vergleich zu Klarlacken auf der Basis von aromatischen Bausteinen enthaltender Bindemittel eine verbesserte Witterungsbeständigkeit aufweisen. Diese in der DE-PS 28 06 497 beschriebenen Klarlacke sind allerdings hinsichtlich des Trocknungsverhaltens und der Verarbeitbarkeit verbesserungsbedürftig.

Außerdem ist aus zahlreichen Produktinformationen über Cyclohexandicarbonsäure der Firma Eastman Kodak Company bekannt, daß der Einsatz von Cyclohexandicarbonsäure als Säurekomponente in Polyestern, die als Bindemittel in Lacken eingesetzt werden, eine gute Glanz- und Rißbeständigkeit der resultierenden Beschichtungen zur Folge hat. Überzugsmittel auf der Basis von Cyclohexandicarbonsäure enthaltenden Polyestern weisen jedoch den Nachteil auf, daß sie zwar ein gutes Trocknungsverhalten zeigen, gleichzeitig aber nur eine sehr begrenzte Topfzeit, d. h. Zeit der Verarbeitkeit, zeigen.

Weiterhin sind aus der Produktinformation Desmophen® A 365 der Firma Bayer AG lufttrocknende Autoreparaturlacke bekannt, die als Bindemittel ein hydroxylgruppenhaltiges Bindemittel (Desmophen® A 365) und als Vernetzer Polyisocyanate, wie z.B. Desmodur® N 3390 und Desmodur® N 75, enthalten. Die erhaltenen Beschichtungen zeichnen sich durch eine gute Glanzhaltung sowie durch hohe Licht- und Kreidungsbeständigkeit aus. Nachteilig ist jedoch die viel zu kurze Topfzeit der Überzugsmassen.

Weiterhin sind aus der DE-OS 38 06 641 Überzugsmassen bekannt, die als Bindemittel eine Mischung aus einem carboxylgruppenhaltigen Polyester und einem carboxylgruppenhaltigen Acrylatharz enthalten. Als Vernetzer werden in diesen Überzugsmassen Epoxidharze eingesetzt.

Schließlich ist es bekannt, die Verträglichkeit der einzelnen Komponenten von Bindemittelmischungen dadurch zu verbessern, daß der Aufbau der einen Komponente in Gegenwart der anderen Komponente durchgeführt wird vgl. EP-A-0 036 975.

Der vorliegenden Erfindung liegt somit die Aufgabe zugrunde, Überzugsmassen auf der Basis von Polykondensationsharzen und Polyadditionsharzen zur Verfügung zu stellen, die eine schnelle Trocknung zeigen und dabei gleichzeitig eine lange Topfzeit aufweisen, d.h. lange Zeit im gebrauchsfertigen Zustand verarbeitbar sind. Außerdem sollen die Überzugsmassen bei Raumtemperatur oder leicht erhöhter Temperatur aushärten, damit sie in der Autoreparaturlackierung eingesetzt werden können. Weiterin sollen sie die Anforderungen, die üblicherweise an einen Klarlack gestellt werden, zumindest erfüllen und ggf. gegenüber herkömmlichen Klarlacken verbesserte mechanische Eigenschaften aufweisen. Die Überzugsmassen sollen daher beispielsweise eine gute Glanzhaltung, Rißbeständigkeit, Fülle und einen guten Verlauf zeigen.

Überraschenderweise wird diese Aufgabe durch Überzugsmittel auf der Basis Hydroxylgruppen enthaltender Polykondensations- und Polyadditionsprodukte, enthaltend

A) eine hydroxylgruppenhaltige Komponente (A) als Bindemittel,
B) mindestens ein Polyisocyanat als Vernetzer,
C) ein oder mehrere organische Lösungsmittel,
D) ggf. übliche Hilfs- und Zusatzstoffe,

bei denen die Komponenten (A) und (B) in solchen Mengen enthalten sind, daß das Verhältnis der Anzahl der freien OH-Gruppen der Komponente (A) zur Anzahl der Isocyanatgruppen der Komponente (B) im Bereich von 1 : 3 bis 3 : 1 liegt und bei denen

I.) die Komponente (A) besteht aus

A1) 5 bis 80 Gew.-% mindestens eines Polyesters und/oder eines Alkydharzes (A1) mit einer OH-Zahl von 0 bis 200 mg KOH/g, einer Säurezahl von 0 bis 200 mg KOH/g und einem zahlenmittleren Molekulargewicht zwischen 500 und 10.000, bevorzugt zwischen 1.000 und 5.000,

A2) 95 bis 20 Gew.-% mindestens eines Polyacrylats (A2) mit einer OH-Zahl von 30 bis 250 mg KOH/g, einer Säurezahl von 0 bis 50 mg KOH/g und einem zahlenmittleren Molekulargewicht zwischen 1.000 und 10.000, bevorzugt zwischen 1.500 und 6.000,

wobei die Summe der Gewichtsanteile der Komponenten (A1) und (A2) jeweils 100 Gew.-% beträgt und

II.) die Komponente (A) erhältlich ist aus

1.) mindestens einem Polyester und/oder einem Alkydharz (A1), der bzw. das erhältlich ist durch Umsetzung von

a) Polycarbonsäuren und/oder deren veresterungsfähige Derivate und ggf. Monocarbonsäuren, wobei 5 bis 100 Mol-% dieser Carbonsäurekomponente cycloaliphatische Polycarbonsäuren und/oder deren veresterungsfähige Derivate sind,

b) Polyolen, ggf. zusammen mit Monoolen,

c) ggf. weiteren modifizierenden Komponenten und

d) ggf. einer mit dem Reaktionsprodukt aus a), b) und ggf. c) reaktionsfähigen Komponente,

2.) mindestens einem Polyacrylat (A2), das zumindest teilweise in Gegenwart der im ersten Verfahrensschritt erhaltenen Komponente (A1) hergestellt worden ist und

3.) ggf. mindestens einem weiteren Polyadditions- und/oder einem weiteren Polykondensationsharz.

Die Überzugsmittel sind dadurch gekennzeichnet, daß die Komponente (A2) unter Verwendung von 5 bis 30 Gew.-%, bezogen auf das Gesamtgewicht der eingesetzten Monomeren, mindestens eines Vinylesters von gesättigten, aliphatischen Monocarbonsäuren mit 9 bis 11 C-Atomen, die am $\alpha$-C-Atom verzweigt sind, hergestellt worden ist.

Die Erfindung betrifft außerdem Verfahren zur Herstellung dieser Überzugsmittel sowie deren Verwendung in der Autoreparaturlackierung, insbesondere als Klarlack. Im folgenden werden nun zunächst die einzelnen Komponenten der erfindungsgemäßen Überzugsmittel näher erläutert.

Die als Bindemittel eingesetzte hydroxylgruppenhaltige Komponente (A) der erfindungsgemäßen Überzugsmittel besteht aus

A1) 5 bis 80 Gew.-% bevorzugt 40 bis 60 Gew.-%, mindestens eines Polyesters und/oder eines Alkyharzes (A1) und

A2) 95 bis 20 Gew.-%, bevorzugt 60 bis 40 Gew.-%, mindestens eines Polyacrylates (A2),

wobei die Summe der Gewichtsanteile der Komponenten (A1) und (A2) jeweils 100 Gew.-% beträgt. Die als Komponente (A1) eingesetzten Polyester bzw. Alkydharze weisen OH-Zahlen von 0 bis 200 mg KOH/g, bevorzugt 30 bis 150 mg KOH/g und Säurezahlen von 0 bis 200 mg KOH/g, bevorzugt 5 bis 50 mg KOH/g, auf. Die zahlenmittleren Molekulargewichte dieser Polyester bzw. Alkydharze liegen zwischen 500 und 10.000, bevorzugt zwischen 1000 und 5000, jeweils gemessen mit GPC gegen Polystyrolstandard. Die Polyester bzw. Alkydharze können ggf. tertiäre Aminogruppen enthalten.

Diese Polyester bzw. Alkydharze (A1) sind erhältlich durch Umsetzung von

a) Polycarbonsäuren oder deren veresterungsfähigen Derivaten, ggf. zusammen mit Monocarbonsäuren,

b) Polyolen, ggf. zusammen mit Monoolen,

c) ggf. weiteren modifizierenden Komponenten und

d) ggf. einer mit dem Reaktionsprodukt aus a), b) und ggf. c) reaktionsfähigen Komponente.

Die zur Herstellung der Polyester bzw. Alkydharze (A1) eingesetzte Carbonsäurekomponente a) besteht zu 5 bis 100 Mol-%, bevorzugt 30 bis 100 Mol-% und besonders bevorzugt zu 50 bis 100 Mol-%, jeweils bezogen auf die Gesamtmenge der Komponente a), aus cycloaliphatischen Polycarbonsäuren und/oder deren veresterungsfähigen Derivaten.

Als Beispiele für geeignete cycloaliphatische Polycarbonsäuren seien Tetrahydrophthalsäure, Hexahydrophthalsäure, 1,2-Cyclohexandicarbonsäure, 1,3-Cyclohexandicarbonsäure, 1,4-Cyclohexandicarbonsäure, 4-Methylhexahydrophthalsäure, Endomethylentetrahydrophthalsäure, Tricyclodecan-Dicarbonsäure, Endoethylenhexahydrophthalsäure, Camphersäure, Cyclohexantetracarbonsäure und Cyclobutantetracarbonsäure genannt. Bevorzugt werden 1,4-Cyclohexandicarbonsäure, Tetrahydrophthalsäure, Hexahydrophthalsäure sowie deren alkylsubstituierte Derivate und besonders bevorzugt 1,4-Cyclohexandicarbonsäure eingesetzt. Die cycloaliphtatischen Polycarbonsäuren können sowohl in ihrer cis- als auch in ihrer trans-Form sowie als Gemisch beider Formen eingesetzt werden.

Als Beispiele für Polycarbonsäuren, die ggf. zusammen mit den cycloaliphatischen Polycarbonsäuren eingesetzt werden können, seien aromatische und aliphatische Polycarbonsäuren genannt, wie z.B. Phthalsäure, Isophthalsäure, Terephthalsäure, Halogenphthalsäuren, wie Tetrachlor- bzw. Tetrabromphthalsäure, Adipinsäure, Glutarsäure, Acelainsäure, Sebacinsäure, Fumarsäure, Maleinsäure, Trimellithsäure, Pyromel-

EP 0 541 604 B1

lithsäure u.a. Geeignet sind auch die veresterungsfähigen Derivate der obengenannten Polycarbonsäuren, wie z.B. deren ein- oder mehrwertige Ester mit aliphatischen Alkoholen mit 1 bis 4-C-Atomen oder Hydroxialkoholen mit 1 bis 4 C-Atomen. Außerdem können auch die Anhydride der obengenannten Säuren eingesetzt werden, sofern sie existieren.

Gegebenenfalls können zusammen mit den Polycarbonsäuren auch Monocarbonsäuren eingesetzt werden, wie beispielsweise Benzoesäure, tert. Butylbenzoesäure, Laurinsäure, Isononansäure und Fettsäuren natürlich vorkommender Öle. Bevorzugt wird als Monocarbonsäure Isononansäure eingesetzt.

Geeignete Alkoholkomponenten b) zur Herstellung des Polyesters bzw. Alkydharzes (A1) sind mehrwertige Alkohole, wie Ethylenglykol, Propandiole, Butandiole, Hexandiole, Neopentylglykol, Diethylenglykol, Cyclohexandiol, Cyclohexandimethanol, Trimethylpentandiol, Ethylbutylpropandiol, Ditrimethylolpropan, Trimethylolethan, Trimethylolpropan, Glycerin, Pentaerythrit, Dipentaerythrit, Trishydroxiethylisocyanat, Polyethylenglykol, Polypropylenglykol, gegebenenfalls zusammen mit einwertigen Alkoholen, wie beispielsweise Butanol, Octanol, Laurylalkohol, ethoxylierten bzw. propoxylierten Phenolen.

Als Komponente c) zur Herstellung der Polyester bzw. Alkydharze (A1) geeignet sind insbesondere Verbindungen, die eine gegenüber den funktionellen Gruppen des Polyesters reaktive Gruppe aufweisen, ausgenommen die als Komponente d) genannten Verbindungen. Als modifizierende Komponente c) werden bevorzugt Polyisocyanate und/oder Diepoxidverbindungen, gegebenenfalls auch Monoisocyanate und/oder Monoepoxidverbindungen verwendet.

Geeignete Polyisocyanate sind beispielsweise Toluylendiisocyanate, Hexamethylendiisocyanat sowie Isophorondiisocyanat. Unter Diepoxidverbindungen sind Epoxidharze mit im Mittel etwa zwei Epoxidgruppen pro Molekül zu verstehen. Geeignete Monoepoxidverbindungen sind beispielsweise Olefinoxide, wie Octylenoxid, Butylglycidylether, Allylglycidylether, Phenylglycidylether, p-Butylphenolglycidylether, Kresylglycidylether, Styryloxid, Glycidylmethacrylat, Cyclohexanvinylmonoxid, Dipentenmonoxid, $\alpha$-Pinenoxid sowie Glycidylester von tertiären Carbonsäuren.

Als Komponente d) zur Herstellung der Polyester bzw. Alkydharze (A1) geeignet sind Verbindungen, die außer einer gegenüber den funktionellen Gruppen des Polyesters (A1) reaktiven Gruppe noch eine tertiäre Aminogruppe aufweisen.

Als mit dem Reaktionsprodukt aus a), b) und ggf. c) reaktionsfähige Komponenten d) werden bevorzugt Monoisocyanate mit mindestens einer tertiären Aminogruppe verwendet. Diese können beispielsweise durch Umsetzung von geeigneten Diisocyanaten, wie Isophorondiisocyanat, mit Aminoalkoholen mit einer tertiären Aminogruppe, wie beispielsweise Hydroxiethylpyridin oder Dimethylaminoethanol, oder mit Polyaminen mit mindestens einer tertiären und mindestens einer sekundären oder primären Aminogruppe hergestellt werden. Die Monoisocyanate werden durch Reaktion mit freien Hydroxylgruppen des Polykondensations- und/oder Additionsproduktes unter Ausbildung einer Urethanbindung an das Bindemittelsystem gebunden. Als Komponente d) können auch Polyamine mit mindestens einer tertiären und mindestens einer primären oder sekundären Aminogruppe verwendet werden. Als Beispiel hierfür sei Dimethylaminopropylmethylamin genannt.

Enthält der Polyester bzw. das Alkydharz (A1) ethylenisch ungesättigte Doppelbindungen, die bevorzugt durch Verwendung von ethylenisch ungesättigten Komponenten a) und/oder b) eingeführt werden, so können als Komponente d) auch Mercaptoverbindungen mit mindestens einer tertiären Aminogruppe eingesetzt werden.

Als Komponente a) werden in diesem Fall beispielsweise Maleinsäureanhydrid oder ungesättigte Fettsäuren verwendet; ein als Komponente b) geeigneter ungesättigter Alkohol ist beispielsweise 1,4-Butendiol. In diesem Fall addieren die Mercaptogruppen des Aminomercaptans mit einer tertiären Aminogruppe an die Doppelbindungen, die durch die Komponente a) und/oder b) in das Bindemittel mit eingebracht werden.

Außer durch Einsatz der Komponente d) (polymeranaloge Umsetzung) können die tertiären Aminogruppen auch durch Verwendung von aminogruppenhaltigen Polyolen und/oder Polycarbonsäuren in den Polyester bzw. das Alkydharz (A1) eingeführt werden.

Als Komponente a) können beispielsweise zusammen mit den cycloaliphatischen und ggf. weiteren Polycarbonsäuren Aminocarbonsäuren mit mindestens einer tertiären Aminogruppe verwendet werden. Beispiele hierfür sind Pyridin-2-carbonsäure, Pyridin-3-carbonsäure, Pyridin-4-carbonsäure und Pyridin-2,6-dicarbonsäure. Außerdem können das Reaktionsprodukt eines Aminoalkohols mit mindestens einer tertiären Aminogruppe und eines Polycarbonsäureanhydrids sowie das Reaktionsprodukt aus einem Polyamin mit mindestens einer tertiären und mindestens einer primären oder sekundären Aminogruppen und einem Polycarbonsäureanhydrid verwendet werden.

Als Alkoholkomponente b) können Aminoalkohole mit mindestens einer tertiären Aminogruppe verwendet werden. Als Beispiel hierfür seien 2-Hydroxiethylpyridin, Dimethylaminopropanol, Methyldiethanolamin, Methyldipropanolamin und Dihydroxiethylanilin genannt. Ebenfalls können als Alkoholkomponente b) Umset-

4

zungsprodukte von Epoxidharzen mit Carbonsäuren und/oder Aminen eingesetzt werden.

Als Alkoholkomponente b) kann so das Umsetzungsprodukt von niedrigmolekularen Epoxidharzen mit Polycarbonsäuren und/oder Polycarbonsäureanhydriden und Aminocarbonsäuren mit mindestens einer tertiären Aminogruppe verwendet werden, wobei anschließend gegebenenfalls noch mit der Säure- und der Alkoholkomponente verestert und ggf. mit Polyisocyanaten modifiziert wird. Unter niedrigmolekularen Epoxidharzen sind Epoxidharze mit einem Molekulargewicht unter etwa 2000 zu verstehen. Bei Verwendung von Epoxidharzen sollten chlorarme Typen eingesetzt werden, da sonst eine starke Verfärbung der Produkte auftreten kann.

Die Herstellung der Polyester (A1) erfolgt nach den bekannten Methoden der Veresterung (vgl. verschiedene Standardwerke, wie z. B.:

1. Temple C. Patton, Alkyd Resin Technology, Interscience Publishers John Wiley & Sons, New York, London 1962;
2. Dr. Johannes Scheiber, Chemie und Technologie der künstlichen Harze, Wissenschaftliche Verlagsgesellschaft mbH, Stuttgart, 1943;
3. Hans Wagner + Hans-Friedrich Sarx, Lackkunstharze, 4. Auflage, Karl Hanser Verlag, München, 1959;
4. Ullmanns Encyklopädie der technischen Chemie, Band 14, Seiten 80 bis 106 (1963)).

Die Umsetzung erfolgt dabei üblicherweise bei Temperaturen zwischen 180 und 280 °C, ggf. in Gegenwart eines geeigneten Veresterungskatalysators, wie z.B. Lithiumoctoat, Dibutylzinnoxid, Dibutylzinndilaurat, para-Toluolsulfonsäure u. ä..

Üblicherweise wird die Herstellung der Polyester bzw. Alkydharze (A1) in Gegenwart geringer Mengen eines geeigneten Lösungsmittels als Schleppmittel durchgeführt. Als Schleppmittel werden z. B. aromatische Kohlenwasserstoffe, wie insbesondere Xylol und (cyclo)aliphatische Kohlenwasserstoffe, z. B. Cyclohexan eingesetzt.

Die als Komponente (A2) in den erfindungsgemäßen Überzugsmitteln eingesetzten Polyacrylate weisen OH-Zahlen von 30 bis 250 mg KOH/g, bevorzugt 50 bis 180 mg KOH/g und Säurezahlen von 0 bis 50 mg KOH/g, bevorzugt 5 bis 20 mg KOH/g, auf. Die zahlenmittleren Molekulargewichte der Polyadditionsharze liegen zwischen 1000 und 10.000, bevorzugt zwischen 1500 und 6000, gemessen jeweils mit GPC gegen Polystryrolstandard. Diese Polyadditionsharze können ggf. tertiäre Aminogruppen enthalten.

Es ist erfindungswesentlich, daß das Polyadditionsharz (A2) zumindest teilweise in Gegenwart des Polykondensationsharzes (A1) hergestellt worden ist. Vorteilhafterweise werden mindestens 20 Gew.-% und besonders vorteilhafterweise 40 bis 80 Gew.-% der Komponente (A2) in Gegenwart der Komponente (A1) hergestellt. Die ggf. restliche Menge der Komponente (A2) wird der Bindemittellösung bzw. dem Überzugsmittel anschließend zugegeben. Dabei ist es möglich, daß dieses bereits polymerisierte Harz die gleiche Monomerzusammensetzung aufweist wie das in Gegenwart des Polykondensationsharzes aufgebaute Polyadditionsharz. Es kann aber auch ein hydroxylgruppenhaltiges Polyadditions- und/oder Polykondensationsharz mit einer unterschiedlichen Monomerzusammensetzung zugefügt werden. Außerdem ist es möglich, eine Mischung verschiedener Polyadditionsharze und/oder Polykondensationsharze zuzufügen, wobei ggf. ein Harz die gleiche Monomerzusammensetzung aufweist wie das in Gegenwart des Polykondensationsharzes aufgebaute Polyadditionsharz.

Die Hydroxylgruppen werden durch Verwendung hydroxylgruppenhaltiger Monomere in das Polyadditionsharz (A2) eingeführt. Üblicherweise werden 20 bis 60 Gew.-%, bevorzugt 25 bis 45 Gew.-%, jeweils bezogen auf das Gesamtgewicht der eingesetzen Monomeren, mindestens eines hydroxylgruppenhaltigen ethylenisch ungesättigten Monomers eingesetzt (Komponente $p_1$).

Als Komponente $p_1$) kommen Hydroxialkylester $\alpha,\beta$-ungesättigter Carbonsäuren mit primären oder sekundären Hydroxylgruppen in Frage. Ist eine hohe Reaktivität des Acrylatcopolymerisats erwünscht, können ausschließlich Hydroxialkylester mit primären Hydroxylgruppen eingesetzt werden; soll das Polyacrylat weniger reaktiv sein, können ausschließlich Hydroxialkylester mit sekundären Hydroxylgruppen eingesetzt werden. Selbstverständlich können auch Mischungen von Hydroxialkylestern mit primären Hxydroxylgruppen und Hydroxialkylestern mit sekundären Hydroxylgruppen verwendet werden. Beispiele für geeignete Hydroxialkylester $\alpha,\beta$-ungesättigter Carbonsäuren mit primären Hydroxylgruppen sind Hydroxiethylacrylat, Hydroxipropylacrylat, Hydroxibutylacrylat, Hydroxiamylacrylat, Hydroxihexylacrylat, Hydroxioctylacrylat und die entsprechenden Methacrylate. Als Beipiele für verwendbare Hydroxialkylester mit einer sekundären Hydroxylgruppe seien 2-Hydroxipropylacrylat, 2-Hydroxibutylacrylat, 3-Hydroxibutylacrylat und die entsprechenden Methacrylate genannt. Selbstverständlich können jeweils auch die entsprechenden Ester anderer $\alpha,\beta$-ungesättigter Carbonsäuren, wie z.B. der Crotonsäure und der Isocrotonsäure eingesetzt werden.

Vorteilhaft kann die Komponente $p_1$) zumindest teilweise ein Umsetzungsprodukt aus einem Mol Hydroxiethylacrylat und/oder Hydroxiethylmethacrylat und durchschnittlich zwei Mol $\epsilon$-Caprolacton sein. Als

5

Komponente $p_1$) kann zumindest teilweise auch ein Umsetzungsprodukt aus Acrylsäure und/oder Methacrylsäure mit der äquivalenten Menge eines Glycidylesters einer Carbonsäure mit einem tertiären $\alpha$-Kohlenstoffatom eingesetzt werden. Glycidylester stark verzweigter Monocarbonsäuren sind unter dem Handelsnamen "Cardura" erhältlich. Die Umsetzung der Acrylsäure oder Methacrylsäure mit dem Glycidylester einer Carbonsäure mit einem tertiären $\alpha$-Kohlenstoffatom kann vor, während oder nach der Polymerisationsreaktion erfolgen. Es ist darauf zu achten, daß die Säurezahl des fertigen Polyacrylats im Bereich von 5 bis 30 mg KOH/g, bevorzugt 8 bis 25 mg KOH/g, liegt.

Zur Herstellung der Polyadditionsharze (A2) werden außerdem 5 bis 30 Gew.-%, bevorzugt 5 bis 20 Gew.-%, jeweils bezogen auf das Gesamtgewicht der eingesetzten Monomeren, mindestens eines Vinylesters von gesättigten, aliphatischen Monocarbonsäuren mit 9 bis 11 C-Atomen, die am $\alpha$-C-Atom verzweigt sind, eingesetzt (Komponente $p_2$). Die verzweigten Monocarbonsäuren können erhalten werden durch die Umsetzung von Ameisensäure oder Kohlenmonoxid und Wasser mit Olefinen in Anwesenheit eines flüssigen, stark sauren Katalysators; die Olefine können Crackprodukte von paraffinischen Kohlenwasserstoffen, wie Mineralölfraktionen sein und können sowohl verzweigte wie geradkettige acyclische und/oder cycloaliphatische Olefine enthalten. Bei der Umsetzung solcher Olefine mit Ameisensäure bzw. mit Kohlenmonoxid und Wasser entsteht ein Gemisch aus Carbonsäuren, bei denen die Carboxylgruppen vorwiegend an einem quaternären Kohlenstoffatom sitzen.

Andere olefinische Ausgangsstoffe sind z.B. Propylentrimer, Propylentetramer und Diisobutylen. Die Vinylester können auch auf an sich bekannte Weise aus den Säuren hergestellt werden, z.B. indem man die Säuren mit Acetylen reagieren läßt.

Üblicherweise werden zur Herstellung der Polyadditionsharze (A2) noch 10 bis 80 Gew.-%, bevorzugt bis zu 60 Gew.-%, jeweils bezogen auf das Gesamtgewicht der eingesetzten Monomeren, mindestens einer vinylaromatischen Verbindung eingesetzt (Komponente $p_3$). Vorzugsweise enthält die Komponente $p_3$) 8 bis 9 Kohlenstoffatome je Molekül. Beispiele für geeignete Verbindungen sind Styrol, Vinyltoluole, $\alpha$-Methylstyrol, Chlorstyrole, o-, m-oder p-Methylstyrol, 2,5-Dimethylstyrol, p-Methoxistyrol, p-tert.-Butylstyrol, p-Dimethylaminostyrol, p-Acetamidostyrol und m-Vinylphenol. Bevorzugt werden Vinyltoluole sowie insbesondere Styrol eingesetzt.

Zum Aufbau des hydroxylgruppenhaltigen Copolymerisats (A2) können außerdem 0 bis 35 Gew.-% anderer, ethylenisch ungesättigter, copolymerisierbarer Monomerer (Komponente $p_4$) eingesetzt werden. Die Auswahl der Monomeren ist nicht besonders kritisch. Es ist aber darauf zu achten, daß der Einbau dieser Monomeren nicht zu unerwünschten Eigenschaften des Copolymerisats führt. So richtet sich die Auswahl der Komponente $p_4$) weitgehend nach den gewünschten Eigenschaften der härtbaren Zusammensetzung in bezug auf Elastizität, Härte,

Verträglichkeit und Polarität. Bevorzugt werden als Komponente $p_4$) Alkylester von olefinisch ungesättigten Carbonsäuren eingesetzt. Beispiele hierfür sind Methyl(meth)acrylat, Ethyl(meth)acrylat, Butyl(meth)acrylat, Isopropyl(meth)acrylat, Isobutyl(meth)acrylat, Pentyl(meth)acrylat, Isoamyl(meth)acrylat, Hexyl(meth)acrylat, Cyclohexyl(meth)acrylat, 2-Ethylhexyl(meth)acrylat, Octyl(meth)acrylat, 3,5,5-Trimethylhexyl(meth)acrylat, Decyl(meth)acrylat, Dodecyl(meth)acrylat, Hexadecyl(meth)acrylat, Octadecyl(meth)acrylat, Octadecenyl(meth)acrylat sowie die entsprechenden Ester der Malein-, Croton-, Isocroton-, Vinylessig- und Itaconsäure.

Geeignet als Komponente $p_4$) sind weiterhin andere ethylenisch ungesättigte Verbindungen, wie beispielsweise Alkoxiethylacrylate, Aryloxiethylacrylate und die entsprechenden Methacrylate, wie z.B. Butoxiethyl(meth)acrylat und Phenoxiethyl(meth)acrylat. Zur Verbesserung der Verträglichkeit können auch geringe Mengen carboxylgruppenhaltiger Monomerer als Komponente $p_4$) mit einpolymerisiert werden. Beispiele für geeignete carboxylgruppenhaltige Monomere sind ungesättigte Carbonsäuren, wie z.B. Acrylsäure, Methacrylsaure, Itaconsäure, Crotonsäure und Halbester der Malein- und Fumarsäure sowie deren Mischungen. Durch Verwendung ungesättigter Verbindungen mit tertiären Aminogruppen als Komponente $p_4$) können tertiäre Aminogruppen in das Copolymerisat (A2) eingeführt werden. Beispiele für geeignete Monomere sind N,N'-Dimethylaminopropylmethacrylamid, N,N'-Diethylaminoethylmethacrylat, 2-Vinylpyridin, 4-Vinylpyridin, Vinylpyrrolin, Vinylchinolin, Vinylisochinolin, N,N'-Dimethylaminoethylvinylether und 2-Methyl-5-vinylpyridin.

Die Polymerisation der Monomerkomponenten $p_1$) bis $p_4$) wird vorzugsweise unter Ausschluß von Sauerstoff, z.B. durch Arbeiten in einer Stickstoff-Atmosphäre, durchgeführt. Der Reaktor ist mit entsprechenden Rühr-, Heiz- und Kühleinrichtungen sowie mit einem Rückflußkühler, in dem flüchtige Bestandteile, wie z.B. Styrol, zurückgehalten werden, ausgerüstet. Die Polymerisationsreaktion wird bei Temperaturen von 100 bis 180°C, bevorzugt 130 - 170°C, unter Verwendung von geeigneten Polymerisationsinitiatoren und ggf. Polymerisationsreglern durchgeführt.

Für die Herstellung der Polyadditionsharze (A2) in Gegenwart der Polykondensationsharze (A1) sind vor allem tert.-Butylgruppen enthaltende Initiatoren, wie z.B. Di.-tert.-butylperoxid, tert.-Butylhydroperoxid, 2,2-Di-tert.-butylperoxibutan und 1,3-Bis-(tert.-butylperoxiisopropyl-)benzol, sowie Dibenzoylperoxid geeignet. Diese Initiatoren fördern eine Pfropfungsreaktion des Acrylatcopolymerisats auf den Polyester. Für die Herstellung der Polyadditionsharze (A2), die nicht in Gegenwart der Polykondensationsharze (A1) hergestellt werden, sind außer diesen oben genannten Initiatoren auch die sonst üblicherweise eingesetzten Initiatoren, wie z.B. Dicumylperoxid, Cumylhydroperoxid, tert.-Amylperbenzoat, tert.-Amylper-2-ethylhexanoat, Diacylperoxide, wie z.B. Diacetylperoxid, Peroxiketale, 2,2-Di-(tert.-amylperoxi-)propan, Ethyl-3,3-di-(tert.-amylperoxi-)butyrat und thermolabile hochsubstituierte Ethanderivate, beispielsweise auf Basis silylsubstituierter Ethanderivate und auf Basis Benzpinakol. Weiterhin können auch aliphatische Azoverbindungen, wie beispielsweise Azoisovaleronitril und Azobiscyclohexannitril, eingesetzt werden.

Die Initiatormenge beträgt in den meisten Fällen 0,1 bis 8 Gew.-%, bezogen auf die zu verarbeitende Monomerenmenge, sie kann ggf. aber auch höher liegen. Der Initiator, gelost in einem Teil des für die Polymerisation eingesetzten Lösungsmittels, wird allmählich während der Polymerisationsreaktion zudosiert. Bevorzugt dauert der Initiatorzulauf etwa 0,5 bis 2 Stunden länger als der Monomerenzulauf, um so auch eine gute Wirkung während der Nachpolymerisationsphase zu erzielen. Werden Initiatoren mit nur einer geringen Zerfallsrate unter den vorliegenden Reaktionsbedingungen eingesetzt, so ist es auch möglich, den Initiator vorzulegen.

Die Polymerisation kann ggf. in Gegenwart eines Reglers durchgeführt werden. Als Regler eignen sich vorzugsweise Mercaptoverbindungen, wobei besonders bevorzugt Mercaptoethanol eingesetzt wird. Andere mögliche Regler sind beispielsweise Alkylmercaptane, wie z.B. t-Dodecylmercaptan, Octylmercaptan, Phenylmercaptan, Octyldecylmercaptan, Butylmercaptan, 2-Ethylhexylthioglycolat, Thiocarbonsäuren, wie etwa Thioessigsäure oder Thiomilchsäure. Diese Regler werden in einer Menge von bis zu 2 Gew.-%, bezogen auf die zu verarbeitende Monomerenmenge eingesetzt. Vorzugsweise werden sie in einem der Monomerenzuläufe gelöst und mit den Monomeren zugegeben. Bevorzugt ist die zugegebene Reglermenge zeitlich konstant.

Die Polymerisation wird bevorzugt in einem hochsiedenden, organischen, gegenüber den eingesetzten Monomeren inerten Lösungsmittel durchgeführt. Beispiele für geeignete Lösungsmittel sind höher substituierte Aromaten, wie z.B. Solvent Naphtha, Schwerbenzol, verschiedene Solvesso®-Typen, verschiedene Shellsol®-Typen und Deasol® sowie höhersiedende aliphatische und cycloaliphatische Kohlenwasserstoffe, wie z.B. verschiedene Testbenzine, Mineralterpentinöl, Tetralin und Dekalin sowie verschiedene Ester, wie z.B. Ethylglykolacetat, Butylglykolacetat, Ethyldiglykolacetat u.ä.. Die Copolymerisation der Komponenten $p_1$) bis $p_4$) erfolgt bevorzugt folgendermaßen, wie dies auch in der EP-A-349 818 beschrieben ist:

In dem Reaktor werden zunächst mindestens 60 Gew.-%, bevorzugt 100 Gew.-%, der insgesamt einzusetzenden Menge der Komponente $p_2$) zusammen mit einem Teil der insgesamt einzusetzenden Lösungsmittelmenge vorgelegt und auf die jeweilige Reaktionstemperatur aufgeheizt. Die restliche Menge des Lösungsmittels wird - wie bereits beschrieben - vorzugsweise zusammen mit dem Katalysator allmählich zugefügt. Die ggf. noch vorhandene restliche Menge der Komponente $p_2$) sowie die übrigen Monomeren (Komponenten $p_1$), $p_3$) und $p_4$)) werden innerhalb eines für alle Komponenten gleich langen Monomerenzugabezeitraumes (beträgt i.a. 2 - 10 h, wie für Acrylatcopolymerisationen üblich) zu der vorgelegten Komponente $p_2$) folgendermaßen zudosiert:

i) Die pro Zeiteinheit zugegebene Menge der ggf. noch vorhandenen Komponente $p_2$) (d.h. die Restmenge der Komponente $p_2$), die nicht vorgelegt wurde) bleibt innerhalb des Monomerenzugabezeitraumes konstant oder nimmt ab, wobei die letzte Verfahrensvariante bevorzugt ist. Im Fall einer konstanten Zugabemenge wird die Komponente $p_2$) bevorzugt zusammen mit den Komponenten $p_1$) und $p_4$) zudosiert.

ii) Die pro Zeiteinheit zugegebene Menge der Komponenten $p_1$) und $p_4$) bleibt innerhalb des Monomerenzugabezeitraumes konstant.

iii) Die pro Zeiteinheit zugegebene Menge der Komponente $p_3$) wird innerhalb des Monomerenzugabezeitraumes so variiert, daß die innerhalb des ersten Drittels des Monomerenzugabezeitraumes insgesamt zugegebene Menge der Komponente $p_3$) 15 bis 30 Gew.-%, bevorzugt 18 bis 26 Gew.-%, der Gesamtmenge der Komponente $p_3$) beträgt. Innerhalb des zweiten Drittels des Monomerenzugabezeitraumes werden insgesamt 25 bis 40 Gew.-%, bevorzugt 30 bis 38 Gew.-% und innerhalb des letzten Drittels des Monomerenzugabezeitraumes werden 35 bis 60 Gew. %, bevorzugt 40 bis 50 Gew.-%, der Gesamtmenge der Komponente $p_3$) zudosiert, wobei selbstverständlich die Summe der Zugabemengen im 1., 2. und 3. Drittel 100 Gew.-% beträgt. Für die Variation der pro Zeiteinheit zugegebenen Menge der Komponente $p_3$) bestehen verschiedene Möglichkeiten, entscheidend ist nur, daß die oben angegebenen, im jeweiligen Drittel insgesamt zugegebenen Mengen eingehalten werden. So besteht beispielsweise die Möglichkeit einer stufenweisen Veränderung der pro Zeiteinheit zugegebenen Menge der Komponente $p_3$). Die Zahl der Stufen, bei denen die Zugabemenge jeweils geändert wird, kann beliebig gewählt werden. So kann beispielsweise die Zugabemenge pro Zeiteinheit der Komponente $p_3$) nur zu Beginn des zweiten und/oder zu Beginn des dritten Drittels erhöht werden. Innerhalb des Drittels bleibt die Zugabemenge pro Zeiteinheit dann jeweils konstant. Es ist aber auch möglich, die pro Zeiteinheit zugegebene Menge der Komponente kontinuierlich zu verändern, entsprechend dem Grenzfall einer unendlichen Stufenzahl.

Die Zugabe der Komponenten in der genannten Weise fördert, wie angenommen wird, die Copolymerisation und reduziert die Homopolymerisation der Einzelkomponenten.

Bevorzugte Überzugsmassen werden erhalten, wenn die Komponente (A1) und/oder die Komponente (A2) tertiäre Aminogruppen enthalten. Bevorzugt werden daher Polykondensationsharze (A1) mit einer Aminzahl von 5 bis 20 mg KOH/g, und/oder Polyadditionsharze (A2) mit einer Aminzahl von 5 bis 20 mg KOH/g, eingesetzt. Die tertiären Aminogruppen können durch Mitverwendung aminogruppenhaltiger Monomerer in das Copolymerisat (A2) eingeführt werden.

Die erhaltenen hydroxylgruppenhaltigen Polyester bzw. Alkydharze bzw. Copolymerisate können aber auch im Anschluß an die Polymerisation noch in einer polymeranalogen Reaktion mit Verbindungen (V) umgesetzt werden, die neben einer tertiären Aminogruppe noch eine gegenüber den funktionellen Gruppen des Copolymerisats reaktionsfähige Gruppe aufweisen. Bevorzugt werden Verbindungen (V) eingesetzt, die pro Molekül durchschnittlich 0,8 bis 1,5, vorzugsweise 1, freie Isocyanatgruppen enthalten.

Die Umsetzung der Copolymerisate (A2) mit den Verbindungen (V) erfolgt in einem isocyanatinerten Lösungsmittel bei Temperaturen von 10 bis 100°C, vorzugsweise 50 bis 80°C, ggf. in Anwesenheit von organischen Zinnverbindungen als Katalysatoren, bis zu einem NCO-Wert von praktisch Null. Die Menge der Verbindung (V) wird dabei so gewählt, daß das entstehende Harz die oben genannte Aminzahl aufweist. Die zur Einführung der tertiären Aminogruppe in das Bindemittel verwendeten Verbindungen (V) werden hergestellt, indem Diisocyanate oder Polyisocyanate mit einem stöchiometrischen Unterschuß an einem tertiären Amin umgesetzt werden. Geeignet für diese Umsetzung sind tertiäre Amine der allgemeinen Formel $NR_1R_2R_3$, wobei $R_1$ bevorzugt einen Alkanolrest oder einen anderen hydroxylgruppenhaltigen Rest bedeutet und $R_2$ bzw. $R_3$ Alkyl- oder Cycloalkylreste darstellen können. Bevorzugt sind Dialkylalkanolamine, wie z.B.

Dimethylethanolamin, Diethylethanolamin sowie deren höhere Homologe bzw. Isomere.

Als Di- oder Polyisocyanate sind beispielsweise geeignet:

Aromatische Isocyanate, wie z.B. 2,4-, 2,6-Toluylendiisocyanat und deren Gemische, 4,4'-Diphenylmethandiisocyanat, m-Phenylen-, p-Phenylen-, 4,4-Diphenyl-, 1,5-Naphthalin-, 1,4-Naphthalin-, 4,4-Toluidin-, Xylylendiisocyanat sowie substituierte aromatische Systeme, wie z.B. Dianisidindiisocyanate, 4,4-Diphenyletherdiisocyanate oder Chlorodiphenylendiisocyanate und höherfunktionelle aromatische Isocyanate, wie z.B. 1,3,5-Triisocyanatobenzol, 4,4',4''-Triisocyanattriphenylmethan, 2,4,6-Triisocyanatotoluol und 4,4'-Diphenyldimethylmethan-2,2', 5,5'-tetraisocyanat; cycloaliphatische Isocyanate, wie z.B. 1,3-Cylcopentan-, 1,4-Cyclohexan-, 1,2-Cyclohexan und Isophorondiisocyanat; aliphatische Isocyanate, wie z.B.Trimethylen-, Tetramethylen-, Pentamethylen-, Hexamethylen-, Trimethylhexamethylen-1,6-diisocyanat und Tris-hexamethylen-triisocyanat.

Vorzugsweise werden Diisocyanate mit unterschiedlich reaktiven Isocyanatgruppen eingesetzt, wie z.B. Isophorondiisocyanat.

Die Komponenten (A1) und (A2) werden in den Überzugsmitteln bevorzugt in solchen Mengen eingesetzt, daß die Bindemittelkomponente (A) eine Säurezahl von maximal 50 mg KOH/g, bevorzugt 5 bis 20 mg KOH/g, eine OH-Zahl von 30 bis 200 mg KOH/g, bevorzugt 50 bis 150 mg KOH/g und bevorzugt eine Aminzahl von 0 bis 20 mg KOH/g, bevorzugt 5 bis 15 mg KOH/g, aufweist.

Die für die Vernetzung der hydroxylgruppenhaltigen Bindemittel als Komponente (B) verwendeten Polyisocyanate sind dieselben Polyisocyanate, die auch zur Herstellung der Verbindung (V) eingesetzt werden. Für geeignete Beispiele sei daher auf die Beschreibung der Verbindung (V) verwiesen. Weiterhin können aber die Polyisocyanate auch zu Präpolymeren mit höherer Molmasse verknüpft sein. Zu nennen sind hierbei Addukte aus Toluylendiisocyanat und Trimethylolpropan, ein aus 3 Molekülen Hexamethylendiisocyanat gebildetes Biuret sowie die Trimeren des Hexamethylendiisocyanates und des 3,5,5-Trimethyl-1-isocyanato-3-isocyanatomethylcyclohexans.

Die Menge des eingesetzten Vernetzers wird so gewählt, daß das Verhältnis der Isocyanatgruppen des Vernetzers zu den Hydroxylgruppen der Komponente (A) im Bereich von 1 : 3 bis 3 : 1 liegt.

Kombinationen mit Polyisocyanaten oder Isocyanatgruppen tragenden Harzen vernetzen selbst bei Raumtemperatur schnell.

Eingesetzt werden können aber auch die oben beschriebenen, mit üblichen Verkappungsmitteln, wie z.B.

Phenolen, Alkoholen, Acetessigsäureestern, Ketoxim- und ε-Caprolactam, umgesetzten Isocyanate. Diese Kombinationen sind bei Raumtemperatur stabil und härten im allgemeinen erst bei Temperaturen oberhalb von 100°C. In besonderen Fällen, z.B. bei Verwendung von Acetessigsäureestern zur Verkappung, kann auch bereits unter 100°C eine Vernetzung eintreten.

Die erfindungsgemäßen Überzugsmittel enthalten als Komponente (C) ein oder mehrere organische Lösungsmittel. Diese Lösungsmittel werden üblicherweise in Mengen von 20 bis 65 Gew.-%, bevorzugt von 30 bis 55 Gew.-%, jeweils bezogen auf das Gesamtgewicht des Überzugsmittels eingesetzt.

Beispiele für geeignete Lösungsmittel sind die obengenannten Verbindungen.

Die erfindungsgemäßen Überzugsmittel können außerdem übliche Hilfs- und Zusatzstoffe in üblichen Mengen, bevorzugt 0,01 bis 10 Gew.-%, bezogen auf das Gesamtgewicht des Überzugsmittel, enthalten (Komponente D). Beispiele für geeignete Hilfs- und Zusatzstoffe sind Verlaufsmittel, wie Silikonöle, Weichmacher, wie Phosphorsäureester und Phthalsäureester, viskositätskontrollierende Zusätze, Mattierungsmittel, UV-Absorber, Lichtschutzmittel und ggf. Füllstoffe.

Die Herstellung der Überzugsmittel aus den Komponenten (A) bis (D) erfolgt in bekannter Weise durch Mischen und ggf. Dispergieren der einzelnen Komponenten (A) bis (D).

Diese Überzugsmittel können durch Spritzen, Fluten, Tauchen, Walzen, Rakeln oder Streichen auf ein Substrat in Form eines Films aufgebracht werden, wobei der Film anschließend zu einem festhaftenden Überzug gehärtet wird.

Die Aushärtung dieser Überzugsmittel erfolgt üblicherweise bei Raumtemperatur oder leicht erhöhter Temperatur, vorteilhafterweise bei Temperaturen unterhalb von 100°C, bevorzugt bei Temperaturen unterhalb von 80°C. Die Überzugsmittel können aber auch unter Einbrennbedingungen, d.h. bei Temperaturen von mindestens 100°C, gehärtet werden.

Als Substrate eignen sich insbesondere Metalle sowie Holz, Kunststoff, Glas u.ä..

Aufgrund der kurzen Härtungszeiten und niedrigen Härtungstemperaturen werden die erfindungsgemäßen Überzugsmittel bevorzugt für die Autoreparaturlackierung, die Lackierung von Großfahrzeugen und LKW-Aufbauten verwendet. Sie können aber - je nach eingesetztem Vernetzer - auch für die Automobilserienlackierung eingesetzt werden.

Des weiteren eignen sie sich insbesondere als Klarlack.

Die erfindungsgemäßen Überzugsmittel zeichnen sich insbesondere durch eine schnelle Trocknung bei gleichzeitig langer Verarbeitbarkeit (Topfzeit) aus. Weiterhin zeigen die resultierenden Beschichtungen, insbesondere im Fall der Klarlackbeschichtungen, gute mechanische Eigenschaften, wie beispielsweise eine gute Glanzhaltung, eine gute Fülle und einen guten Verlauf.

Nachfolgend wird die Erfindung anhand von Ausführungsbeispielen näher erläutert. Alle Angaben über Teile und Prozente sind dabei Gewichtsangaben, falls nicht ausdrücklich etwas anderes festgestellt wird.

1. Herstellung der Polyester 1 bis 6

In einen 4l-Edelstahlkessel mit Rührer, dampfbeheizter Kolonne und Wasserabscheider werden die in der Tabelle 1 angegebenen Rohstoffe eingewogen. Nach Zugabe von 4% (bez. auf Einwaage Polyesterrohstoffe) Xylol als Schleppmittel wird langsam (innerhalb von 5-7 Stunden) auf 220°C aufgeheizt. Das entstehende Wasser wird azeotrop abdestilliert. Nach Erreichen einer Säurezahl von 12-14 mg KOH/g wird mit Shellsol®A (einem handelsüblichen Gemisch von C3-C4-alkylsubstituierten Aromaten) auf einen Gehalt an nichtflüchtigen Anteilen von 70% angelöst.

Tabelle 1

| Zusammensetzung der Polyester 1 bis 6 in Molen | | | | | | |
|---|---|---|---|---|---|---|
| Polyesterharz | 1 | 2 | 3 | 4 (V) | 5 | 6 (V) |
| PSA | 0,77 | | | | | 1,0 |
| 1,4-CHDA | 0,23 | | | | 1,0 | |
| THPSA | | 1,0 | | | | |
| HHPSA | | | 1,0 | | | |
| IPS | | | | 1,0 | | |
| Trimethylolpropan | 1,08 | 1,08 | 1,08 | 1,18 | 1,2 | 1,07 |
| Isononansäure | 0,62 | 0,62 | 0,62 | 0,70 | 0,70 | 0,62 |
| Kennzahlen: | | | | | | |
| Viskosität | 7,9 | 3,9 | 4,55 | 19 | 6,6 | 5,0 |
| Säurezahl | 14,7 | 14,3 | 13,8 | 12,3 | 10,3 | 12,0 |
| OH-Zahl | 107 | 107 | 106 | 130 | 140 | 100 |

(1,4-CHDA = 1,4-Cyclohexandicarbonsäure, HHPSA = Hexahydrophthalsäureanhydrid, THPSA = Tetrahydrophthalsäureanhydrid, IPS = Isophthalsäure, PSA = Phthalsäureanhydrid, V = Vergleich) OH-Zahl und Säurezahl angegeben in mg KOH/g; Viskosität gemessen auf einem Platte/Kegel Viskosimeter bei 23°C, Angabe in dPa•s; Mengenangaben in Mol

2. Herstellung der Copolymerisatlösungen 1 bis 6

Die Herstellung der polyestermodifizierten Polyadditionsharze erfolgt in einem 4l-Edelstahlkessel mit Rührer, Rückflußkühler und Zulaufeinrichtungen. Als Vorlage werden jeweils die Lösungen der Polyesterharze und variable Mengen eines handelsüblichen Gemisches von Vinylestern von gesättigten aliphatischen Monocarbonsäuren mit überwiegend 10 C-Atomen, die am α-C-Atom verzweigt sind, (Handelsprodukt VeoVa® 10 der Firma Shell) vorgelegt und auf 165°C aufgeheizt.

Copolymerisatlösung 1

In den Kessel werden eingewogen und vermischt:
998,75 Teile Polyesterharz 5
118,32 Teile VeoVa® 10
In den Monomerzulauf werden eingewogen und vermischt:
236,64 Teile Methylmethacrylat
236,64 Teile Hydroxiethylmethacrylat
591,60 Teile Styrol
In den Initiatorzulauf werden eingewogen und vermischt
36,0 Teile di-tert.-Butylperoxid
124,2 Teile Shellsol®A
Innerhalb von vier Stunden wird die Monomerenmischung, innerhalb von fünf Stunden die Initiatormischung gleichmäßig zudosiert. Die Temperatur kann dabei bis auf 160°C fallen. Man läßt nach Beendigung des Initiatorzulaufes noch zwei weitere Stunden bei 160-165°C nachpolymerisieren. Die so erhaltene Copolymerisatlösung hat einen Festkörper von 83,6% (15 Minuten bei 180°C)und eine Viskosität, gemessen 55%ig in Butylacetat von 3,95 dPa.s. Die Polymerisatlösung wird dann mit Xylol auf eine Feststoffgehalt von 70% und mit Bytylacetat weiter auf 60% Festkörper angelöst. Die Viskosität der 60%igen Lösung beträgt 9,1 dPa.s. Das Acrylatcopolymerisat 1 weist eine OH-Zahl von 86 mg KOH/g auf. Die Mischung weist eine Säurezahl von 3,6 mg KOH/g und eine OH-Zahl von 105 mg KOH/g auf.

Copolymerisatlösung 2

Die Herstellung der Copolymerisatlösung 2 erfolgt ähnlich wie die Herstellung der Copolymerisatlösung 1. Eingesetzte Mengen an Polyestervorstufe und Monomermischung sowie Initiatormenge bleiben relativ zueinander gleich und setzen sich wie folgt zusammen:

In den Kessel werden eingewogen und vermischt:

600,00 Teile Polyesterharz 1

63,00 Teile VeoVa® 10

In den Monomerzulauf werden eingewogen und vermischt:

126,00 Teile Methylmethacrylat

126,00 Teile Hydroxiethylmethacrylat

315,00 Teile Styrol

In den Initiatorzulauf werden eingewogen und vermischt

12,6 Teile di-tert.-Butylperoxid

85,60 Teile Shellsol® A

Die analog zum Verfahren der Copolymerisatlösung 1 erhaltene Copolymerisatlösung 2 weist nach der Polymerisation einen Festkörper (15 Minuten bei 180°C) von 83,4% und eine Viskosität, gemessen 55%ig in Butylacetat von 3,2 dPa.s auf. Analog zum Copolymerisat 1 wird das Copolymerisat 2 mit Xylol zunächst auf 70% Festkörper, dann mit Butylacetat auf einen Festkörper von 60% verdünnt. Die Originalviskosität liegt bei 8,8 dPa.s. Das Acrylatcopolymerisat weist eine OH-Zahl von 86 mg KOH/g auf. Die Mischung weist eine Säuezahl von 5,1 mg KOH/g und eine OH-Zahl von 95 mg KOH/g auf.

Copolymerisatlösung 3

Die Herstellung der Copolymerisatlösung 3 erfolgt ähnlich wie die Herstellung der Copolymerisatlösung 1. Eingesetzte Mengen an Polyestervorstufe und Monomermischung sowie Initiatormenge bleiben relativ zueinander gleich und setzen sich wie folgt zusammen:

In den Kessel werden eingewogen und vermischt:

600,00 Teile Polyesterharz 2

63,00 Teile VeoVa® 10

In den Monomerzulauf werden eingewogen und vermischt:

126,00 Teile Methylmethacrylat

126,00 Teile Hydroxiethylmethacrylat

315,00 Teile Styrol

In den Initiatorzulauf werden eingewogen und vermischt

12,6 Teile di-tert.-Butylperoxid

85,60 Teile Shellsol® A

Die analog zum Verfahren der Copolymerisatlösung 1 erhaltene Copolymerisatlösung 3 weist nach der Polymerisation einen Festkörper (15 Minuten bei 180°C) von 82,1% und eine Viskosität, gemessen 55%ig in Butylacetat von 5,1 dPa.s auf. Analog zum Copolymerisat 1 wird das Copolymerisat 3 mit Xylol zunächst auf 70% Festkörper, dann mit Butylacetat auf einen Festkörper von 60% verdünnt. Die Originalviskosität liegt bei 18,5 dPa.s. Das Acrylatcopolymerisat 3 weist eine OH-Zahl von 86 mg KOH/g auf. Die Mischung weist eine Säurezahl von 5,83 mg KOH/g und eine OH-Zahl von 95 mg KOH/g auf.

Copolymerisatlösung 4

Die Herstellung der Copolymerisatlösung 4 erfolgt ähnlich wie die Herstellung der Copolymerisatlösung 1. Eingesetzte Mengen an Polyestervorstufe und Monomermischung sowie Initiatormenge bleiben relativ zueinander gleich und setzen sich wie folgt zusammen:

In den Kessel werden eingewogen und vermischt:

600,00 Teile Polyesterharz 3

63,00 Teile VeoVa® 10

In den Monomerzulauf werden eingewogen und vermischt:

126,00 Teile Methylmethacrylat

126,00 Teile Hydroxiethylmethacrylat

315,00 Teile Styrol

In den Initiatorzulauf werden eingewogen und vermischt

12,6 Teile di-tert.-Butylperoxid

85,60 Teile Shellsol® A

Die analog zum Verfahren der Copolymerisatlösung 1 erhaltene Copolymerisatlösung 4 weist nach der Polymerisation einen Festkörper (15 Minuten bei 180°C) von 83,5% und eine Viskosität, gemessen 55%ig in Butylacetat von 2,3 dPa.s auf. Analog zum Copolymerisat 1 wird das Copolymerisat 4 mit Xylol zunächst auf 70% Festkörper, dann mit Butylacetat auf einen Festkörper von 60% verdünnt. Die Originalviskosität liegt bei 6,05 dPa.s. Das Acrylatcopolymerisat 4 weist eine OH-Zahl von 86 mg KOH/g auf. Die Mischung weist eine OH-Zahl von 95 mg KOH/g und eine Säurezahl von 6,50 mg KOH/g auf.

Copolymerisatlösung 5 (Vergleich)

Die Herstellung der Copolymerisatlösung 5 erfolgt ähnlich wie die Herstellung der Copolymerisatlösung 1. Eingesetzte Mengen an Polyestervorstufe und Monomermischung sowie Initiatormenge bleiben relativ zueinander gleich und setzen sich wie folgt zusammen:
In den Kessel werden eingewogen und vermischt:
600,00 Teile Polyesterharz 4
63,00 Teile VeoVa® 10
In den Monomerzulauf werden eingewogen und vermischt:
126,00 Teile Methylmethacrylat
126,00 Teile Hydroxiethylmethacrylat
315,00 Teile Styrol
In den Initiatorzulauf werden eingewogen und vermischt
12,6 Teile di-tert.-Butylperoxid
85,60Teile Shellsol® A
Die analog zum Verfahren der Copolymerisatlösung 1 erhaltene Copolymerisatlösung 5 weist nach der Polymerisation einen Festkörper (15 Minuten bei 180°C) von 81,5% (Bei Festkörpermessung ist die Zugabe von Xylol notwendig.) und eine Viskosität, gemessen 55%ig in Butylacetat von 4,6 dPa.s auf. Analog zum Copolymerisat 1 wird das Copolymerisat 5 mit Xylol zunächst auf 70% Festkörper, dann mit Butylacetat auf einen Festkörper von 60% verdünnt. Die Originalviskosität liegt bei 14,0 dPa.s. Das Acrylatcopolymerisat 5 weist eine OH-Zahl von 86 mg KOH/g auf. Die Mischung weist eine Säurezahl von 5,1 mg KOH/g und eine OH-Zahl von 105 mg KOH/g auf.

Copolymerisatlösung 6 (Vergleich)

Die Herstellung der Copolymerisatlösung 6 erfolgt ähnlich wie die Herstellung der Copolymerisatlösung 1. Eingesetzte Mengen an Polyestervorstufe und Monomermischung sowie Initiatormenge bleiben relativ zueinander gleich und setzen sich wie folgt zusammen:
In den Kessel werden eingewogen und vermischt:
600,00 Teile Polyesterharz 6
63,00 Teile VeoVa® 10
In den Monomerzulauf werden eingewogen und vermischt:
126,00 Teile Methylmethacrylat
126,00 Teile Hydroxiethylmethacrylat
315,00 Teile Styrol
In den Initiatorzulauf werden eingewogen und vermischt
12,6 Teile di-tert.-Butylperoxid
85,60Teile Shellsol® A
Die analog zum Verfahren der Copolymerisatlösung 1 erhaltene Copolymerisatlösung 6 weist nach der Polymerisation einen Festkörper (15 Minuten bei 180°C) von 81,5% (Bei Festkörpermessung ist die Zugabe von Xylol notwendig.) und eine Viskosität, gemessen 55%ig in Butylacetat von 3,5 dPa.s auf. Analog zum Copolymerisat 1 wird das Copolymerisat 6 mit Xylol zunächst auf 70% Festkörper, dann mit Butylacetat auf einen Festkörper von 60% verdünnt. Die Originalviskosität liegt bei 9,0 dPa.s. Das Acrylatcopolymerisat 6 weist eine OH-Zahl von 86 mg KOH/g auf. Die Mischung weist eine Säurezahl von 5,6 mg KOH/g und eine OH-Zahl von 92 mg KOH/g auf.

3. Herstellung einer Lackverdünnung 1

Die Lackverdünnung 1 wird aus folgenden Komponenten hergestellt:
15 Teile Xylol
13 Teile Solvent Naphtha
10 Teile eines handelsüblichen Kohlenwasserstoffgemisches mit einem Siedebereich von 135 - 185°C und einem Aromatengehalt von ca. 16,5%
50 Teile Butylacetat

5 Teile 1-Methoxipropylacetat-2

3 Teile Butylglykolacetat

2 Teile 3-Methoxybutylacetat

2 Teile eines handelsüblichen Gemisches aus monocyclischen Terpenen mit einem Siedebereich von 162 - 182 °C

4. Herstellung einer Härterlösung 1

Die Härterlösung 1 wird aus folgenden Komponenten hergestellt:

50,6 Teile trimerisiertes Hexamethylendiisocyanat, 90%ig in einer 1:1 Mischung aus Butylacetat und Solvent Naphtha

10,8 Teile Solvent Naphtha

7,5 Teile Xylol

1,5 Teile Butylacetat

14,0 Teile 1-Methoxipropylacetat-2

11,0 Teile Butylglykolacetat

4,0 Teile einer 1%igen Lösung von Dibutylzinndilaurat in einem 1:1-Gemisch aus Xylol und Butylacetat

0,6 Teile eines handelsüblichen Silikonöles

Beispiele 1 bis 5 sowie Vergleichsbeispiele 1 bis 3

Aus den in Tabelle 2 angegebenen Komponenten werden durch Vermischen die Klarlacklösungen 1 bis 8 hergestellt.

Tabelle 2: Zusammensetzung der Klarlacke 1 bis 8

| Lack Nr. | 1 | 2 | 3 (Vgl) | 4 (Vgl) | 5 | 6 | 7 (Vgl) | 8 |
|---|---|---|---|---|---|---|---|---|
| Butylacetat 98/100 | 7,2 | 7,2 | 7,2 | 7,2 | 7,2 | 7,2 | 7,2 | 7,2 |
| Xylol | 3,8 | 3,8 | 3,8 | 3,8 | 3,8 | 3,8 | 3,8 | 3,8 |
| Solventnaphta | 2,8 | 2,8 | 2,8 | 2,8 | 2,8 | 2,8 | 2,8 | 2,8 |
| Tinuvin® 292 | 1,2 | 1,2 | 1,2 | 1,2 | 1,2 | 1,2 | 1,2 | 1,2 |
| Tinuvin® 1130 | 1,0 | 1,0 | 1,0 | 1,0 | 1,0 | 1,0 | 1,0 | 1,0 |
| Copolymerisatlösung 1 | 60,0 | | | | | | | |
| Copolymerisatlösung 2 | | 84,0 | | | | | | |
| Copolymerisatlösung 3 | | | 84 | | | | | |
| Copolymerisatlösung 4 | | | | 84 | | | | |
| Copolymerisatlösung 5 | | | | | 84,0 | | | |
| Copolymerisatlösung 6 | | | | | | 84,0 | | |
| Copolymerisatlösung 7* | | | | | | | 84,0 | |
| Copolymerisatlösung 8* | 24,0 | | | | | | | 84,0 |

* Bei der Copolymerisatlösung 7 handelt es sich um Desmophen® A 365 der Firma Bayer; die Copolymerisatlösung 8 ist ein handelsübliches Cardura® E 10 modifiziertes OH-Acrylat, das in Autoreparaturklarlacken eingesetzt wird (Handelsprodukt Macrynal® SM 513 der Firma Hoechst).

Die Klarlacklösungen werden mit der Lackverdünnung 1 vorverdünnt und anschließend mit der Lackverdünnung 1 auf eine Viskosität, gemessen im DIN 4-Auslaufbecher bei 23°C, von 18 Sekunden eingestellt. Die Lacklösungen werden dann im Mischungsverhältnis 2:1 mit der Härterlösung 1 vermischt. Zur Bestimmung der Pendelhärte werden von den Lacken Glasaufgüsse hergestellt und bei 60°C für 30 Minuten eingebrannt bzw. 24 Stunden bei Raumtemperatur belassen. Bei einer Schichtdicke von 20 $\mu$m (trocken) wird dann die Pendelhärte des Filmes bestimmt. Für die anderen Prüfvorgänge wird der Lack auf phosphatierte und beschichtete Stahlbleche appliziert. Die phosphatierten Stahlbleche werden hierzu mit einem handelsüblichen 2-Komponenten Polyurethan-Füller (OH-Komponenten = polyestermodifiziertes hydroxylgruppenhaltiges Acrylat mit einer OH-Zahl von 90 - 110 mg KOH/g; Isocyanat-Komponente = über Biuretstruktur trimerisiertes Hexamethylendiisocyanat) beschichtet, über Nacht getrocknet und anschließend mit einem handelsüblichen konventionellen Metallic-Basis-Lack (physikalisch getrocknet, basierend auf Polyesterharz, Melaminharz, Celluloseacetobutyrat, Aluminium-flakes) beschichtet. Nach einer Ablüftzeit von 30 min. wird der Klarlack appliziert. Die Tafeln werden sofort den beschriebenen Prüfungen unterzogen. Die Ergebnisse sind in den Tabellen 3 und 4 zusammengestellt.

Tabelle 3: Prüfergebnisse

| Lack Nr.: | 1 | 2 | 3 (Vgl) | 4 (Vgl) | 5 | 6 | 7 (Vgl) | 8 |
|---|---|---|---|---|---|---|---|---|
| Spritzvikosität (s) | 18 | 18 | 18 | 18,5 | 18 | 18 | 18 | 17 |
| Anfallviskosität (s) | 36 | 46 | 37 | 90 | 51 | 75 | 60 | 33 |
| Zusatzverdünnung (Tle) | 12, | 11,3 | 9,9 | 26 | 12,1 | 18,1 | 12,8 | 8,62 |
| Viskositätsverlauf (DIN 4, in Sekunden) | | | | | | | | |
| Anfangsviskosität | 17 | 16,5 | 16 | 17 | 17 | 16,5 | 16,5 | 16 |
| nach 60 Minuten | 19 | 17,5 | 18 | 18,5 | 19 | 18 | 18 | 16,5 |
| nach 120 Minuten | 20 | 19 | 21 | 21 | 20 | 19 | 20 | 18 |
| nach 240 Minuten | 23,5 | 24 | 27,5 | 31 | 26 | 22 | 21.5 | 21 |
| nach 360 Minuten | 33.5 | 44 | 60 | -- | 43 | 36 | 95 | 36 |
| Pendelhärte[1] | | | | | | | | |
| Raumtemperatur | 65 | 64 | 64 | 59 | 63 | 74 | 78 | 76 |
| 30', 60°C | 59 | 72 | 72 | 66 | 77 | 81 | 98 | 76 |

Tabelle 4

| Lack Nr.: | 1 | 2 | 3 (Vgl) | 4 (Vgl) | 5 | 6 | 7 (Vgl) | 8 |
|---|---|---|---|---|---|---|---|---|
| Trocknung<br>Staubfreiheit[2] nach:<br>Klebfreiheit[3] nach: | 115'<br>>420' | 205'<br>>420' | 170'<br>420' | 170'<br>325' | 115'<br>>420 | 170'<br>325' | 170'<br>325' | 205'<br>>420' |
| Drying recorder[4]<br>    1. Phase<br>    2. Phase<br>    3. Phase | --<br>65'<br>205' | --<br>85'<br>220' | --<br>145'<br>205' | --<br>50'<br>215' | --<br>130'<br>200' | --<br>90'<br>205' | --<br>110'<br>150' | --<br>155'<br>300' |

Erläuterungen zu Tabelle 3 und Tabelle 4:

1) Pendelhärte nach König in s

2) Staubfreiheit: Ca. 15 Minuten nach dem Aufspritzen des Lackes wird die Tafel an einer Ecke mit einer kleinen Probe Seesand (3 - 4 g) bestreut. Die Tafel wird dann aus einer Höhe von 30 cm mit der Kante aufgestoßen (freier Fall). Staubfreiheit ist erreicht, wenn keine Sandanhaftung vorliegt. Die Prüfung wird nach jeweils 15 Minuten wiederholt, kurz vor Erreichen der Staubfreiheit wird das Wiederholungsintervall auf 5 Minuten verkürzt.

3) Klebfreiheit:
Ca. 20 Minuten nach Erreichen der Staubfreiheit wird die lackierte Tafel mit einem ca. $3cm^2$ Blättchen Papier belegt. Auf dieses Papier wird eine kleine Platte aus Hartkunstoff gelegt, auf das dann ein Gewicht von 100g aufgelegt wird. Nach genau 1 Minute wird wie beim Test auf Staubfreiheit geprüft, ob das Papier noch anhaftet. Zeitintervall wie bei der Prüfung auf Staubfreiheit.

4) Drying recorder:
Die Prüfung erfolgt nach der folgenden Vorschrift. Sie wurde im Vergleich zu der des Trocknungs-Rekorders Modell 504 der Firma Erichsen leicht abgewandelt.
Vor der Lackierung der Stahlbleche mit dem Basislack werden 25 mm breite und 30 cm lange Glasstreifen in Längsrichtung auf die jeweilige Prüftafel geklebt. Die Prüftafeln mitsamt Glasstreifen werden dann mit dem Basislack und nach einer Ablüftzeit von 30 Minuten mit dem Klarlack beschichtet. Die Glasstreifen werden entfernt und in einer speziellen Prüfvorrich-

tung (Drying recorder) eingespannt. Mit Hilfe des Drying recorders wird nun eine Nadel mit einem Durchmesser von 1 mm innerhalb von 6 Stunden über den Lack gezogen. Dabei erscheinen, bedingt durch die Trocknung des Lackes, drei unterschiedliche Kratzspuren, Phasen genannt. In der ersten Phase dringt die Nadel bis zum Glas durch, der Lack fließt noch zusammen. In der zweiten Phase ist eine deutliche Kratzspur zu erkennen, der Lack fließt nicht mehr zusammen. In der dritten Phase dringt die Nadel nur sehr leicht in die Lackoberfläche ein und hinterläßt nur eine kaum sichtbare Spur. Als Phasenwechsel wird die Mitte des Übergangs zwischen zwei eindeutig definierbaren Phasen angegeben.

Die Abprüfungen erfolgten jeweils bei einer Umgebungstemperatur von 26 - 28°C.

**Patentansprüche**

1. Überzugsmittel auf der Basis Hydroxylgruppen enthaltender Polykondensations- und Polyadditionsprodukte, enthaltend

   A) eine hydroxylgruppenhaltige Komponente (A) als Bindemittel,
   B) mindestens ein Polyisocyanat als Vernetzer,
   C) ein oder mehrere organische Lösungsmittel,
   D) ggf. übliche Hilfs- und Zusatzstoffe,

   bei dem die Mengen der Komponenten (A) und (B) in solchen Mengen enthalten sind, daß das Verhältnis der Anzahl der freien OH-Gruppen der Komponente (A) zur Anzahl der Isocyanatgruppen der Komponente (B) im Bereich von 1 : 3 bis 3 : 1 liegt und bei dem

   I.) die Komponente (A) besteht aus

   A1) 5 bis 80 Gew.-% mindestens eines Polyesters und/oder eines Alkydharzes (A1) mit einer OH-Zahl von 0 bis 200 mg KOH/g, einer Säurezahl von 0 bis 200 mg KOH/g und einem zahlenmittleren Molekulargewicht zwischen 500 und 10.000, bevorzugt zwischen 1.000 und 5.000,
   A2) 95 bis 20 Gew.-% mindestens eines Polyacrylats (A2) mit einer OH-Zahl von 30 bis 250 mg KOH/g, einer Saurezahl von 0 bis 50 mg KOH/g und einem zahlenmittleren Molekulargewicht zwischen 1.000 und 10.000, bevorzugt zwischen 1.500 und 6.000,

   wobei die Summe der Gewichtsanteile der Komponenten (A1) und (A2) jeweils 100 Gew.-% beträgt und

   II.) die Komponente (A) erhältlich ist aus

   1.) mindestens einem Polyester und/oder einem Alkydharz (A1), der bzw. das erhältlich ist durch Umsetzung von

   a) Polycarbonsäuren und/oder deren veresterungsfähigen Derivaten und ggf. Monocarbonsäuren, wobei 5 bis 100 Mol-% dieser Carbonsäurekomponente cycloaliphatische Polycarbonsäuren und/oder deren veresterungsfähige Derivate sind,
   b) Polyolen, ggf. zusammen mit Monoolen,
   c) ggf. weiteren modifizierenden Komponenten und
   d) ggf. einer mit dem Reaktionsprodukt aus a), b) und ggf. c) reaktionsfähigen Komponente,

   2.) mindestens einem Polyacrylat (A2), das zumindest teilweise in Gegenwart der Komponente (A1) hergestellt worden ist und
   3.) ggf. mindestens einem weiteren Polyadditions- und/oder einem weiteren Polykondensationsharz,

dadurch gekennzeichnet, daß die Komponente (A2) unter Verwendung von 5 bis 30 Gew.-%, bezogen auf das Gesamtgewicht der eingesetzten Monomeren, mindestens eines Vinylesters von gesättigten aliphatischen Monocarbonsäuren mit 9 bis 11 C-Atomen, die am α-C-Atom verzweigt sind, hergestellt worden ist.

2. Überzugsmittel nach Anspruch 1, dadurch gekennzeichnet, daß die Komponente (A) besteht aus
   A1) 40 bis 60 Gew.-% mindestens eines Polyesters und/oder Alkydharzes (A1) und
   A2) 60 bis 40 Gew.-% mindestens eines Polyacrylats (A2).

3. Überzugsmittel nach Anspruch 1 oder 2, dadurch gekennzeichnet, daß als Komponente a) zur Herstellung des Polyesters bzw. Alkydharzes (A1) 30 bis 100 Mol-% cycloaliphatische Polcarbonsäuren oder deren veresterungsfähige Derivate eingesetzt worden sind.

4. Überzugsmittel nach einem der Ansprüche 1 bis 3, dadurch gekennzeichnet, daß als cycloaliphatische Polycarbonsäure (Komponente a)) zur Herstellung der Komponente (A1) Cyclohexandicarbonsäure und/oder Tetrahydrophthalsäure und/oder Hexahydrophthalsäure und/oder deren alkylsubstitutierte Derivate eingesetzt worden sind.

5. Überzugsmittel nach einem der Ansprüche 1 bis 4, dadurch gekennzeichnet, daß als cycloaliphatische Polycarbonsäure (Komponente a)) zur Herstellung der Komponente (A1) Cyclohexan-1,4-dicarbonsäure und Isononansäure eingesetzt worden sind.

6. Überzugsmittel nach einem der Ansprüche 1 bis 5, dadurch gekennzeichnet, daß zur Herstellung der Komponente (A2) 5 bis 20 Gew.-%, bezogen auf das Gesamtgewicht der eingesetzten Monomeren, mindestens eines Vinylesters von gesättigten aliphatischen Monocarbonsäuren mit 9 bis 11 C-Atomen, die am α-C-Atom verzweigt sind, eingesetzt worden sind.

7. Überzugsmittel nach einem der Ansprüche 1 bis 6, dadurch gekennzeichnet, daß als Komponente (A1) Polyester und/oder Alkydharze mit einer OH-Zahl von 30 bis 150 mg KOH/g und einer Säurezahl von 5 bis 50 mg KOH/g und/oder als Komponente (A2) Polyacrylate mit einer OH-Zahl von 50 bis 180 mg KOH/g und einer Säurezahl von 5 bis 20 mg KOH/g eingesetzt worden sind.

8. Überzugsmittel nach einem der Ansprüche 1 bis 7, dadurch gekennzeichnet, daß 40 bis 80 Gew.-% der Komponente (A2) in Gegenwart des Polyesters (A1) hergestellt worden sind.

9. Überzugsmittel nach einem der Ansprüche 1 bis 8, dadurch gekennzeichnet, daß der Polyester und/oder das Alkydharz (A1) und/oder das Polyadditionsharz (A2) tertiäre Aminogruppen enthalten.

10. Überzugsmittel nach einem der Ansprüche 1 bis 9, dadurch gekennzeichnet, daß der Polyester und/oder das Alkydharz (A1) eine Aminzahl von 5 bis 20 mg KOH/g und/oder das Polyacrylat (A2) eine Aminzahl von 5 bis 20 mg KOH/g aufweisen.

11. Überzugsmittel nach einem der Ansprüche 1 bis 10, dadurch gekennzeichnet, daß das Bindemittel (A) eine OH-Zahl von 30 bis 200 mg KOH/g und eine Säurezahl von 5 bis 50 mg KOH/g aufweist.

12. Überzugsmittel nach einem der Ansprüche 1 bis 11, dadurch gekennzeichnet, daß das Bindemittel (A) eine OH-Zahl von 50 bis 150 mg KOH/g und eine Säurezahl von 5 bis 20mg KOH/g aufweist.

13. Überzugsmittel nach einem dere Ansprüche 1 bis 12, dadurch gekennzeichnet, daß die Komponente (A) eine OH-Zahl von 80 bis 120 mg KOH/g und eine Säurezahl von 5 bis 20 mg KOH/g aufweist, wobei die Komponente (A1) eine Säurezahl von 0 bis 20 mg KOH/g und die Komponente (A2) eine Säurezahl von 0 bis 20 mg KOH/g aufweist.

14. Verfahren zur Herstellung der Überzugsmittel nach einem der Ansprüche 1 bis 13, bei dem
   A) eine hydroxylgruppenhaltige Komponente (A) als Bindemittel,
   B) mindestens ein Polyisocyanat als Vernetzer,
   C) ein oder mehrere organische Lösungsmittel,

D) ggf. übliche Hilfs- und Zusatzstoffe

gemischt und ggf. dispergiert werden, wobei die Komponenten (A) und (B) in solchen Mengen verwendet werden, daß das Verhältnis der Anzahl der freien OH-Gruppen der Komponente (A) zur Anzahl der Isocyanatgruppen der Komponente (B) im Bereich von 1 : 3 bis 3 : 1 liegt und bei dem

I.) eine Komponente (A) eingesetzt wird, die aus

A1) 5 bis 80 Gew.-% mindestens eines Polyesters und/oder Alkydharzes (A1) mit einer OH-Zahl von 0 bis 200 mg KOH/g, einer Säurezahl von 0 bis 200 mg KOH/g und einem zahlenmittleren Molekulargewicht zwischen 500 und 10.000, bevorzugt zwischen 1.000 und 5.000, und

A2) 95 bis 20 Gew.-% mindestens eines Polyacrylats (A2) mit einer OH-Zahl von 30 bis 250 mg KOH/g, einer Säurezahl von 0 bis 50 mg KOH/g und einem zahlenmittleren Molekulargewicht zwischen 1.000 und 10.000, bevorzugt zwischen 1.500 und 6.000,

besteht, wobei die Summe der Gewichtsanteile der Komponenten (A1) und (A2) jeweils 100 Gew.-% beträgt und

II.) die Komponente (A) hergestellt wird, indem

1.) mindestens ein Polyester und/oder Alkydharz (A1) durch Umsetzung von

a) Polycarbonsäuren und/oder deren veresterungsfähigen Derivaten und ggf. Monocarbonsäuren, wobei 5 bis 100 Mol-% dieser Carbonsäurekomponente cycloaliphatische Polycarbonsäuren und/oder deren veresterungsfähige Derivate sind,

b) Polyolen, ggf. zusammen mit Monoolen,

c) ggf. weiteren modifizierenden Komponenten und

d) ggf. einer mit dem Reaktionsprodukt aus a), b) und ggf. c) reaktionsfähigen Komponente, hergestellt wird,

2.) mindestens ein Polyacrylat (A2) zumindest teilweise in Gegenwart der im ersten Verfahrensschritt erhaltenen Komponente (A1) hergestellt wird und

3.) ggf. nicht in Gegenwart des Polyesters (A1) hergestelltes Polyacrylat (A2) und ggf. mindestens ein weiteres Polyadditions- und/oder Polykondensationsharz zugesetzt werden,

dadurch gekennzeichnet, daß die Komponente (A2) unter Verwendung von 5 bis 30 Gew.-%, bezogen auf das Gesamtgewicht der eingesetzten Monomeren, mindestens eines Vinylesters von gesättigten, aliphatischen Monocarbonsäuren mit 9 bis 11 C-Atomen, die am α-C-Atom verzweigt sind, hergestellt wird.

15. Verwendung der Überzugsmittel nach einem der Ansprüche 1 bis 13 für die Reparaturlackierung von Autokarossen und für Großfahrzeug-Lackierung sowie die Lackierung von LKW-Aufbauten.

16. Verwendung der Überzugsmittel nach einem der Ansprüche 1 bis 13 als Klarlack.

**Claims**

1. Coating agent based on hydroxyl-containing polycondensation and polyaddition products, comprising

A) a hydroxyl-containing component (A) as binder,

B) at least one polyisocyanate as crosslinking agent,

C) one or more organic solvents,

D) if desired, conventional auxiliaries and additives, in which the amounts of components (A) and (B) are present in such amounts [sic] that the ratio of the number of free OH groups of component (A) to the number of isocyanate groups of component (B) is in the range from 1 : 3 to 3 : 1 and in which

I.) component (A) comprises

A1) 5 to 80% by weight of at least one polyester and/or one alkyd resin (A1) having an OH number from 0 to 200 mg of KOH/g, an acid number from 0 to 200 mg of KOH/g and a number-average molecular weight between 500 and 10,000, preferably between 1000 and 5000,

A2) 95 to 20% by weight of at least one polyacrylate (A2) having an OH number from 30 to 250 mg of KOH/g, an acid number from 0 to 50 mg of KOH/g and a number-average molecular weight between 1000 and 10,000, preferably between 1500 and 6000,

the sum of the weight proportions of components (A1) and (A2) being in each case 100% by weight and

II.) component (A) is obtainable from

1.) at least one polyester and/or one alkyd resin (A1), which is obtainable by reaction of

EP 0 541 604 B1

a) polycarboxylic acids and/or esterifiable derivatives thereof and, if desired, monocarboxylic acids, 5 to 100 mol% of this carboxylic acid component being cycloaliphatic polycarboxylic acids and/or esterifiable derivatives thereof,

b) polyols, if desired together with monools,

c) if desired, further modifying components, and

d) if desired, a component capable of reacting with the reaction product from a), b) and, if desired, c),

2.) at least one polyacrylate (A2), at least some of which has been prepared in the presence of the component (A1), and

3.) if desired, at least one further polyaddition and/or one further polycondensation resin, characterized in that component (A2) has been prepared using 5 to 30% by weight, based on the total weight of the monomers used, of at least one vinyl ester of saturated, aliphatic monocarboxylic acids having 9 to 11 C atoms, which are branched in the $\alpha$-C atom.

2. Coating agent according to Claim 1, characterized in that component (A) comprises

A1) 40 to 60% by weight of at least one polyester and/or one alkyd resin (A1) and

A2) 60 to 40% by weight of at least one polyacrylate (A2).

3. Coating agent according to Claim 1 or 2, characterized in that 30 to 100 mol% of cycloaliphatic polcarboxylic [sic] acids or esterifiable derivatives thereof have been used as component a) for preparing the polyester or alkyd resin (A1).

4. Coating agent according to one of Claims 1 to 3, characterized in that cyclohexane dicarboxylic acid and/or tetrahydrophthalic acid and/or hexahydrophthalic acid and/or alkyl-substituted derivatives thereof have been used as cycloaliphatic polycarboxylic acid (component a)) for preparing component (A1).

5. Coating agent according to one of Claims 1 to 4, characterized in that cyclohexane-1,4-dicarboxylic acid and isononanoic acid have been used as cycloaliphatic polycarboxylic acid (component a)) for preparing component (A1).

6. Coating agent according to one of Claims 1 to 5, characterized in that 5 to 20% by weight, based on the total weight of the monomers used, of at least one vinyl ester of saturated aliphatic monocarboxylic acids having 9 to 11 C atoms, which are branched in the $\alpha$-C atom, have been used for preparing component (A2).

7. Coating agent according to one of Claims 1 to 6, characterized in that polyesters and/or alkyd resins having an OH number from 30 to 150 mg of KOH/g and an acid number from 5 to 50 mg of KOH/g have been used as component (A1) and/or polyacrylates having an OH number from 50 to 180 mg of KOH/g and an acid number from 5 to 20 mg of KOH/g have been used as component (A2).

8. Coating agent according to one of Claims 1 to 7, characterized in that 40 to 80% by weight of component (A2) have been prepared in the presence of polyester (A1).

9. Coating agent according to one of Claims 1 to 8, characterized in that the polyester and/or alkyd resin (A1) and/or polyaddition resin (A2) contain tertiary amino groups.

10. Coating agent according to one of Claims 1 to 9, characterized in that the polyester and/or alkyd resin (A1) have an amine number from 5 to 20 mg of KOH/g and/or polyacrylate (A2) has an amine number from 5 to 20 mg of KOH/g.

11. Coating agent according to one of Claims 1 to 10, characterized in that binder (A) has an OH number from 30 to 200 mg of KOH/g and an acid number from 5 to 50 mg of KOH/g.

12. Coating agent according to one of Claims 1 to 11, characterized in that binder (A) has an OH number from 50 to 150 mg of KOH/g and an acid number from 5 to 20 mg of KOH/g.

13. Coating agent according to one of Claims 1 to 12, characterized in that component (A) has an OH number from 80 to 120 mg of KOH/g and an acid number from 5 to 20 mg of KOH/g, component (A1)

22

having an acid number from 0 to 20 mg of KOH/g and component (A2) an acid number from 0 to 20 mg of KOH/g.

14. Process for the preparation of the coating agent according to one of Claims 1 to 13, in which process

A) a hydroxyl-containing component (A) as binder,

B) at least one polyisocyanate as crosslinking agent,

C) one or more organic solvents,

D) if desired, conventional auxiliaries and additives, are mixed and, if necessary, dispersed, in which components (A) and (B) are used in such amounts that the ratio of the number of free OH groups of component (A) to the number of isocyanate groups of component (B) is in the range from 1 : 3 to 3 : 1 and in which

I.) a component (A) is used which comprises

A1) 5 to 80% by weight of at least one polyester and/or one alkyd resin (A1) having an OH number from 0 to 200 mg of KOH/g, an acid number from 0 to 200 mg of KOH/g and a number-average molecular weight between 500 and 10,000, preferably between 1000 and 5000, and

A2) 95 to 20% by weight of at least one polyacrylate (A2) having an OH number from 30 to 250 mg of KOH/g, an acid number from 0 to 50 mg of KOH/g and a number-average molecular weight between 1000 and 10,000, preferably between 1500 and 6000,

the sum of the weight proportions of components (A1) and (A2) being in each case 100% by weight and

II.) component (A) is prepared by preparing

1.) at least one polyester and/or one alkyd resin (A1), by reaction of

a) polycarboxylic acids and/or esterifiable derivatives thereof and, if desired, monocarboxylic acids, 5 to 100 mol% of this carboxylic acid component being cycloaliphatic polycarboxylic acids and/or esterifiable derivatives thereof,

b) polyols, if desired together with monools,

c) if desired, further modifying components, and

d) if desired, a component capable of reacting with the reaction product from a), b) and, if desired, c),

2.) at least one polyacrylate (A2) is prepared, at least some of which is prepared in the presence of the component (A1) obtained in the first process step, and

3.) adding any polyacrylate (A2) not prepared in the presence of polyester (A1) and, if desired, at least one further polyaddition and/or polycondensation resin,

characterized in that component (A2) is prepared using 5 to 30% by weight, based on the total weight of the monomers used, of at least one vinyl ester of saturated, aliphatic monocarboxylic acids having 9 to 11 C atoms, which are branched in the $\alpha$-C atom.

15. Use of the coating agent according to one of Claims 1 to 13 for the refinishing of automotive bodies and for the coating of large vehicles and the coating of truck superstructures.

16. Use of the coating agent according to one of Claims 1 to 13 as clearcoat.

## Revendications

1. Agent de revêtement à base de produits de polycondensation et de polyaddition contenant des groupements hydroxyles, contenant

A) un composant (A) contenant des groupements hydroxyles en tant que liant,

B) au moins un polyisocyanate en tant qu'agent de réticulation,

C) un ou plusieurs solvants organiques,

D) le cas échéant, des additifs et adjuvants usuels,

pour lequel les quantités des composants (A) et (B) sont contenues dans de telles quantités que le rapport du nombre de groupements OH libres du composant (A) au nombre de groupements isocyanates du composant (B) se situe dans le domaine de 1 : 3 à 3 : 1 et pour lequel

I.) le composant (A) se compose

A1) de 5 à 80 % en poids au moins d'un polyester et/ou d'une résine alkyde (A1) ayant un indice OH de 0 à 200 mg KOH/g, un indice d'acidité de 0 à 200 mg KOH/g et un poids moléculaire moyen au nombre compris entre 500 et 10 000, de préférence entre 1 000 et 5 000,

# EP 0 541 604 B1

A2) de 95 à 20 % en poids au moins d'un polyacrylate (A2) ayant un indice OH de 30 à 250 mg KOH/g, un indice d'acidité de 0 à 50 mg KOH/g et un poids moléculaire moyen au nombre compris entre 1 000 et 10 000, de préférence entre 1 500 et 6 000,

la somme des proportions en poids des composants (A1) et (A2) étant à chaque fois de 100 % en poids et

II.) le composant (A) peut s'obtenir à partir

1.) d'au moins un polyester et/ou une résine alkyde (A1), qui peut s'obtenir par réaction

a) d'acides polycarboxyliques et/ou de leurs dérivés estérifiables et, le cas échéant, d'acides monocarboxyliques, de 5 à 100 % en moles de ces composants d'acide carboxylique étant des acides polycarboxyliques cycloaliphatiques et/ou leurs dérivés estérifiables,

b) de polyols, le cas échéant, conjointement à des monoalcools,

c) le cas échéant, d'autres composants à fonction modificatrice et,

d) le cas échéant, un composant capable de réagir avec le produit de réaction en provenance de a), de b) ou, le cas échéant, de c),

2.) d'au moins un polyacrylate (A2), qui a été préparé au moins en partie en présence du composant (A1) et

3.) le cas échéant, d'au moins une autre résine de polyaddition et/ou de polycondensation,

caractérisé en ce que l'on a préparé le composant (A2) en utilisant de 5 à 30 % en poids, par rapport au poids total des monomères utilisés, d'au moins un ester vinylique d'acides monocarboxyliques aliphatiques saturés ayant de 9 à 11 atomes de C, qui sont ramifiés à l'atome de C en position $\alpha$.

2. Agent de revêtement selon la revendication 1, caractérisé en ce que le composant (A) se compose
A1) de 40 à 60 % en poids d'au moins un polyester et/ou d'une résine alkyde (A1) et
A2) de 60 à 40 % en poids d'au moins un polyacrylate (A2).

3. Agent de revêtement selon la revendication 1 ou 2, caractérisé en ce que l'on a utilisé en tant que composant a) pour la préparation du polyester, respectivement de la résine alkyde (A1), de 30 à 100 % en moles d'acides polycarboxyliques cycloaliphatiques ou de leurs dérivés estérifiables.

4. Agent de revêtement selon l'une quelconque des revendications 1 à 3, caractérisé en ce que l'on a utilisé en tant qu'acide polycarboxylique cycloaliphatique (composant a)) pour la préparation du composant (A1) des acides cyclohexanedicarboxyliques et/ou de l'acide tétrahydrophtalique et/ou de l'acide hexahydrophtalique et/ou leurs dérivés substitués à l'aide de groupements alkyles.

5. Agent de revêtement selon l'une quelconque des revendications 1 à 4, caractérisé en ce que l'on a utilisé en tant qu'acide polycarboxylique cycloaliphatique (composant a)) pour la préparation du composant (A1) de l'acide cyclohexane-1,4-dicarboxylique et de l'acide isononanoïque.

6. Agent de revêtement selon l'une quelconque des revendications 1 à 5, caractérisé en ce que l'on a utilisé pour la préparation du composant (A2) de 5 à 20 % en poids, par rapport au poids total des monomères utlisés, d'au moins un ester vinylique d'acides monocarboxyliques aliphatiques saturés ayant de 9 à 11 atomes de C, qui sont ramifiés à l'atome de C en position $\alpha$.

7. Agent de revêtement selon l'une quelconque des revendications 1 à 6, caractérisé en ce que l'on a utilisé en tant que composant (A1) des polyesters et/ou des résines alkydes ayant un indice OH de 30 à 150 mg KOH/g, et un indice d'acidité de 5 à 50 mg KOH/g et/ou en tant que composant (A2) des polyacrylates ayant un indice OH de 50 à 180 mg KOH/g et un indice d'acidité de 5 à 20 mg KOH/g.

8. Agent de revêtement selon l'une quelconque des revendications 1 à 7, caractérisé en ce que l'on a préparé de 40 à 80 % en poids du composant (A2) en présence du polyester (A1).

9. Agent de revêtement selon l'une quelconque des revendications 1 à 8, caractérisé en ce que le polyester et/ou la résine alkyde (A1) et/ou la résine de polyaddition (A2) contienne(nt) des groupements amino tertiaires.

10. Agent de revêtement selon l'une quelconque des revendications 1 à 9, caractérisé en ce que le polyester et/ou la résine alkyde (A1) présente(nt) un indice d'amine de 5 à 20 mg KOH/g ou que le polyacrylate (A2) présente un indice d'amine de 5 à 20 mg KOH/g.

24

**11.** Agent de revêtement selon l'une quelconque des revendications 1 à 10, caractérisé en ce que le liant (A) présente un indice OH de 30 à 200 mg KOH/g et un indice d'acidité de 5 à 50 mg KOH/g.

**12.** Agent de revêtement selon l'une quelconque des revendications 1 à 11, caractérisé en ce que le liant (A) présente un indice OH de 50 à 150 mg KOH/g et un indice d'acidité de 5 à 20 mg KOH/g.

**13.** Agent de revêtement selon l'une quelconque des revendications 1 à 12, caractérisé en ce que le composant (A) présente un indice OH de 80 à 120 mg KOH/g et un indice d'acidité de 5 à 20 mg KOH/g, le composant (A1) présentant un indice d'acidité de 0 à 20 mg KOH/g et le composant (A2) un indice d'acidité de 0 à 20 mg KOH/g.

**14.** Procédé de préparation d'agents de revêtement selon l'une quelconque des revendications 1 à 13, lors duquel
on mélange et, le cas échéant, on disperse
    A) un composant (A) contenant des groupements hydroxyles en tant que liant,
    B) au moins un polyisocyanate en tant qu'agent de réticulation,
    C) un ou plusieurs solvants organiques,
    D) le cas échéant, des additifs et adjuvants usuels,
les composants (A) et (B) étant utilisés dans des quantités telles que le rapport du nombre de groupements OH libres du composant (A) au nombre de groupements isocyanates du composant (B) se situe dans le domaine de 1 : 3 à 3 : 1 et lors duquel
    I.) on utilise un composant (A) qui se compose
        A1) de 5 à 80 % en poids au moins d'un polyester et/ou d'une résine alkyde (A1) ayant un indice OH de 0 à 200 mg KOH/g, un indice d'acidité de 0 à 200 mg KOH/g et un poids moléculaire moyen au nombre compris entre 500 et 10 000, de préférence entre 1 000 et 5 000,
        A2) de 95 à 20 % en poids au moins d'un polyacrylate (A2) ayant un indice OH de 30 à 250 mg KOH/g, un indice d'acidité de 0 à 50 mg KOH/g et un poids moléculaire moyen au nombre compris entre 1 000 et 10 000, de préférence entre 1 500 et 6 000,
        la somme des proportions en poids des composants (A1) et (A2) étant à chaque fois de 100 % en poids et
    II.) le composant (A) est préparé en ce que l'on prépare
        1.) au moins un polyester et/ou une résine alkyde (A1), par réaction
            a) d'acides polycarboxyliques et/ou de leurs dérivés estérifiables et, le cas échéant, d'acides monocarboxyliques, de 5 à 100 % en moles de ces composants d'acide carboxylique étant des acides polycarboxyliques cycloaliphatiques et/ou leurs dérivés estérifiables,
            b) de polyols, le cas échéant conjointement à des monoalcools,
            c) le cas échéant, d'autres composants à fonction modificatrice et,
            d) le cas échéant, un composant capable de réagir avec le produit de réaction en provenance de a), de b) ou, le cas échéant, de c),
        l'on prépare
        2.) au moins un polyacrylate (A2), qui est préparé au moins en partie en présence du composant (A1) obtenu au cours de la première étape du procédé et en ce que
        l'on ajoute,
        3.) le cas échéant, du polyacrylate (A2), qui n'a pas été préparé en présence du polyester (A1), et, le cas échéant, au moins une autre résine de polyaddition et/ou de polycondensation,
caractérisé en ce que l'on prépare le composant (A2) en utilisant de 5 à 30 % en poids, par rapport au poids total des monomères utilisés, d'au moins un ester vinylique d'acides monocarboxyliques aliphatiques saturés ayant de 9 à 11 atomes de C, qui sont ramifiés à l'atome de C en position $\alpha$.

**15.** Utilisation des agents de revêtement selon l'une quelconque des revendications 1 à 13 pour le laquage de réparation des carrosseries d'automobiles et pour le laquage des véhicules de grande taille ainsi que pour le laquage des carrosseries de véhicules poids lourds.

**16.** Utilisation des agents de revêtement selon l'une quelconque des revendications 1 à 13 en tant que laque claire.